# EUROPEAN PATENT APPLICATION

(11) **EP 4 729 820 A1**
(43) Date of publication of application: **22.04.2026**
(21) Application number: 24207333.6
(22) Date of filing: 17.10.2024
(51) Int. Cl.: F16L 37/096, G01N 27/28, F16L 19/065

(54) **KIT OF PARTS FOR RELEASABLY COUPLING AND SECURING A TUBULAR ELEMENT TO A FITTING, FITTING SYSTEM COMPRISING THE KIT OF PARTS, AND METHODS FOR ASSEMBLING AND DISASSEMBLING ASSEMBLIES COMPRISING THE FITTING SYSTEM**

(71) Applicant: Mettler-Toledo (Albstadt) GmbH, 72458 Albstadt (DE)
(72) Inventor: Maute, Manuel, 72459 Albstadt (DE)
(74) Representative: Mettler-Toledo

(57) **Abstract**

Suggested is a kit of parts configured for releasably coupling and securing a tubular element (3) to a connector fitting (2). The kit of parts comprises the tubular element (3), a first clamping ring (7) configured to attach to the tubular element, a second clamping ring (8), and a latch (10) pivotably attached to the second clamping ring (8) at a pivot axis (15). A tip of the latch comprises a barbed hook (11) and is arranged with the barbed hook extending radially inward in relation to the second clamping ring and with the barb (12) extending axially towards the second clamping ring such that an undercut is shaped between an axially extending body section of the latch and the barb. The first clamping ring (7) comprises a groove (18) adapted and configured to receive the barb (12), wherein a rim shaped between the at least one groove and a radial outer circumference of the first clamping ring is sized and configured to be received within the undercut.

## Description

### Technical Field

The invention as herein claimed relates to a kit of parts for releasably coupling and securing a tubular element to a fitting, to fitting systems comprising the kit of parts, and to methods for assembling and disassembling assemblies comprising the fitting system, as set forth in the appended claims.

### Background Art

For a large number of technical applications, it is necessary to take in situ measurements on a fluid in a container, vessel, fluid line, or other containing structure configured to contain a fluid. Fittings may be arranged on the container, and retractable probes may be provided in the fittings and into the fluid. In known devices, a clamping ring is provided on the fitting to lock the probe by friction. Said clamping ring may furthermore provide sealing at the interface to the probe.

However, if the pressure of the fluid to be measured may rise to values exceeding a certain threshold, the probe may be forced out of the fitting.

An analogous problem may arise when fixing other tubular elements, like fluid conduits, to a fitting by a clamping ring: While the named arrangement provides superior versatility, the fixation may fail as the pressure of the fluid increases.

DE 10 2014 205 889 suggests a fitting assembly in which the probe or other tubular element is locked to the fitting by positive locking. In one embodiment, two latches forming barbed hooks at their free ends are provided on the tubular element and are intended to engage mating structures provided on the fitting to provide positive locking between the fitting and the tubular element. However, the latches engage the fitting on a lower side thereof, and facing the container, which might hinder visual inspection of safe locking. The mobile latches are attached to the probe, and so the dangling latches might be conceived bothersome when handling the probe. The latches must be manually operated when mounting the probe to the fitting. Sealing is provided directly in the fitting, and thus the probe must be advanced and retracted inside the fitting against the frictional resistance of the sealings, which may add inconvenience to the insertion and removal of the probe and accelerates wear of the sealings. Hence, while DE 10 2014 205 889 provides an essentially functional arrangement, some details deserve further consideration.

### Summary of invention

It is an object of the present disclosure to suggest the subject matter initially mentioned. In one aspect, the herein disclosed subject matter is intended to overcome at least some of the drawbacks of the art. More in particular, it shall be enabled to safely lock elements, like tubular lines, instrumentation and so forth, to a fitting providing access to the interior of a containing structure configured for containing a fluid, like for instance, while not limited to, a vessel, container, or line. In more specific aspects, certain embodiments of the disclosed subject matter shall be suitable to add on existing setups. In particular, the kit of parts can be used to allow the use of an existing setup in situations where increased fluid pressures may occur, whereby an increased fluid pressure is a pressure above the threshold for which the existing setup without the kit of parts would have been suitable.

Accordingly, disclosed is, in one aspect, a kit of parts configured for releasably coupling and securing a tubular element to a connector fitting, the kit of parts comprising the tubular element, a first clamping ring configured to attach to the tubular element, and a latch. The latch is pivotably attached to a second clamping ring at a pivot axis. The latch extends from the pivot axis to a tip of the latch along an axial direction of the latch, wherein the tip of the latch is moveable along a radial direction of the second clamping ring by a pivoting movement of the latch around the pivot axis. The tip of the latch comprises a barbed hook and is arranged with the barbed hook extending radially inward in relation to the second clamping ring and with the barb extending axially towards the second clamping ring. Thus, an undercut is shaped between an axially extending body section of the latch and the barb. The first clamping ring, in an axial face thereof, comprises at least one groove adapted and configured to receive the barb. A rim shaped between the groove and a radial outer circumference of the first clamping ring is sized and configured to be received within the undercut shaped between the axially extending body section of the latch and the barb of the latch. The tubular element may in non-limiting embodiments be a replaceable instrumentation, for instance comprising or being equipped with a mounting structure for a probe configured for measuring at least one physical property of a fluid in a container, vessel, fluid line and the like to which the connector fitting is fluidly connected. In other embodiments, however, the tubular element may for instance be a fluid line which is configured for being releasably connected to said container, vessel, fluid line or other containing structure configured to contain a fluid, via the connector fitting.

It is intended that the second clamping ring shall be mounted to a connector fitting with the tip of the latch extending beyond the free end of the connector fitting and the barbed hook pointing radially inward. It is further intended that the tubular element is attached to the connector fitting and the first clamping ring is mounted to the tubular element with at least one of the at least one groove adapted and configured to receive the barb pointing away from the connector fitting. The barb may thus be received in said at least one groove, whereby also the rim shaped between the groove and the radial outer circumference of the first clamping ring is received within the undercut shaped between the axially extending body section of the latch and the barb of the latch. Hence, the barbed hook and the first clamping ring jointly provide positive locking of the tubular element to the connector fitting in an axial direction of the tubular element, while the barb and the rim interlock and secure the latch in the radial direction, such that the latch is securely locked to the first clamping ring in the positive locking position.

Removable instrumentation, for an instance, is generally attached to connector fittings from top, or at least from a hemisphere above a fluid-containing structure, typically at an angle equal to or greater than 15° above the horizontal. This ensures a reliable measurement as some probes are filled with liquids and allows the cleaning of the probes in a maintenance position inside the connector fitting. Thus, a free end of the connector fitting preferably points upward and away from any fluid-containing structure. Consequently, if the herein suggested kit of parts is used as intended, generally, the tip of the latch extends upward and is not obscured by fluid-containing structures. In some embodiments, the probes may allow to be mounted upside down respectively at angles of less than 15° above the horizontal. In these cases, the free end of the connector fitting points away from the fluid-containing structure to which the connector fitting is mounted, too and is thereby also not obscured by said fluid-containing structure. An unobstructed optical inspection of the functional interlock between the barbed hook and the first clamping ring is thus always enabled. Optical inspection can be performed along a line of sight essentially coincident with the direction along which the tubular element is attached to the connector fitting, for instance the direction along which an instrumentation of probe is inserted through the connector fitting. Ergonomics are largely improved, which, naturally, comes along with an increased safety against handling errors. In addition, the weight and more complex structure of the latch is provided at the stationary connector fitting, while the only part of the kit which is mounted to the tubular element is the first clamping ring. Therefore, the handling of the movable part - the tubular fitting- is not hindered by an increase or asymmetry in weight or a complex shape.

Further effects and advantages of the disclosed subject matter, whether explicitly mentioned or not, will become apparent in view of the disclosure provided below.

It is noted that within the framework of the present disclosure the use of the indefinite article "a" or "an" does in no way stipulate a singularity nor does it exclude the presence of a multitude of the named member or feature. It is thus to be read in the sense of "at least one" or "one or a multitude of".

The latch, or the tip thereof, respectively, may in embodiments be preloaded radially inward to further support interlocking of the latch, or the barbed hook thereof, respectively, and the first clamping ring. A spring may be provided to effect the preload. Such a preloading allows on the one hand that the securing action takes place automatically once the tubular element is inserted down to a measurement level into the connector fitting and on the other hand, it can keep the latch in a well-defined position, facilitating thereby the handling for the user. In a preferred embodiment, the second clamping rind and/or the latch are provided with limiting means which limit the range of motion of the latch in the direction of its preloading. Preferably, the limiting means are a protrusion on the latch and a contact surface on the second clamping ring. In this embodiment, said protrusion of the latch protrudes radially inwardly from a position proximately from the pivot point. In this embodiment, the second clamping ring comprises said contact surface against which the protrusion is pushed by the preloading in the absence of first clamping ring or any other means which push the latch radially outwards. In another embodiment, the limiting means are a protrusion on the second clamping ring and a contact surface on the latch. In this embodiment, it is the second clamping ring which provides a protrusion extending radially outwards to contact said contact surface on the latch, whereby the latch is pushed by the preloading against the protrusion on the second clamping ring. Combinations of the two embodiments, such as two contacting protrusions, are also possible. Similarly, the limiting means can be provided at a position distally from said pivot point, where a radially outward motion of the latch, caused by the preloading can be limited by a suitable surface or radially inwardly extending protrusion of the second clamping ring. The first embodiment of a protrusion on the latch and a contact surface of the second clamping ring is preferred as it facilitates the manufacturing and assembly of the kit.

The pivot axis of the latch may in embodiments be provided at least essentially at an end of the latch, namely the end of the latch opposite the tip of the latch. It may thus in particular be provided that the latch has no actuating cantilever beyond the pivot axis when seen from the tip of the latch. Thus, the tip of the latch can only be moved radially outwards, i.e., into an unlock position with the first clamping ring, by an intentional pulling actuation. Accidental unlocking actuation by a grasping movement can thus be prevented. Preferably, the second clamping ring is equipped with two parallel side walls comprising a common bore to hold the pivot axis of the latch which is centred and guided by the two walls. In particular, the length and shape of the latch distally of the pivot axis as well as the extend of the walls is such that there is, over the whole range of motion of the latch, in radial direction no gap between the latch and the walls. Thereby, the risk of something getting stuck in between the two parts and either blocking the pivoting or causing an unintended motion of the latch is significantly reduced. Preferably, the part of the latch distally of the pivot axis is over the whole range of its motion in the volume between the two walls.

Further, a tip surface at the tip of the latch may be bevelled in embodiments, wherein a radially outer side of the latch extends further than a radially inner side when seen from the pivot axis, so as to provide a sloping contact surface. Thus, when a first clamping ring, for instance mounted to a tubular element, moves along an axis of the connector fitting and towards the connector fitting, such that the first clamping ring eventually abuts against the sloping contact surface of the latch, the first clamping ring forces the tip of the latch radially outward until the front face of the first clamping ring pointing away from the distal end of the tubular element has passed the barb of the latch. Thereafter, the tip of the latch may return radially inward to interlock the barbed hook of the latch with the first clamping ring. The radially inward movement may be self-acting if the latch is preloaded radially inward. This makes the use of the device even more comfortable and faster.

In one embodiment, the latch comprises a protruding stop. Said stop extends radially inwardly and is arranged between the pivot axis and the barbed hook. The axial distance between the proximal face of the stop and the most distal part of the barbed hook is greater than the axial extent of the first clamping ring. Preferably, the axial distance between the proximal face of the stop and the most distal part of the barbed hook less than 2 times, most preferably, less than 1.5 times the axial extent of the first clamping ring. The groove in the first clamping ring forced the user to push the tubular element further into the connector fitting that needed during normal operation before the latch can be pulled radially outwards, releasing the barb from the groove and allowing thereby the separation of the first clamping ring from the latch and the second clamping ring to which the latch in mounted. The protruding stop can help the user by preventing that the tubular element is accidentally pushed in further than needed: As long as the latch is not pulled away from the tubular element, the inserting motion brings the first clamping ring closer to the stop and finally ends this motion. If the first clamping rind contact the stop, the latch can be pulled radially outwards: As the axial distance between the proximal face of the stop and the most distal part of the barbed hook is greater than the axial extent of the first clamping ring, the barb is in this position above the groove and can therefore be pulled over the rim. In the preferred embodiment, the user will be able to see that the tubular element is sufficiently far inserted to open the coupling. This makes the use more intuitively while it is at the same time prevented that the tubular element is inserted to much which could make the extraction difficult.

In one embodiment, at least the second clamping ring, most preferably the first and the second clamping ring, comprise of two separatable halves. This allows the kit to be mounted to an existing connector fitting respectively to an existing tubular element. Many connector fittings are equipped with additional connectors, clamping rings and/or flanges which can make it difficult or impossible to slide a clamping ring at an optimal position for securing the fitting. By providing it in two separatable halves, the sliding -on is avoided. The halves can be connected by, for example, a bolt and nut connection or other tensioning devices or clamps. The ability to use the kit of the invention to retrofit existing fittings makes is well suitable as additional security device to be used in addition to the primary means to couple a tubular element to a connector fitting which are provided by the existing fittings.

The tubular element may further comprise a mounting structure to mount a replaceable instrumentation. The replaceable instrumentation has a dedicated distal end. The dedicated distal end is in particular the end of the replaceable instrumentation intended to be connected to the connector fitting, for example intended to be received inside the connector fitting or inside a fluid. The first clamping ring may be mounted to the tubular element such that at least one of the at least one groove of the first clamping ring is arranged on a proximal-facing front face of the first clamping ring, i.e., a front face of the first clamping ring pointing away from the dedicated distal end of the replaceable instrumentation. Further, the first clamping ring is mounted at a non-zero distance from the dedicated distal end. Preferably, the first clamping ring is mounted in such a distance from the dedicated distal end that the dedicated distal end is at a desired position relative to the connector fitting when the barb of the barbed hook is received in the groove of the first clamping ring. Thereby, the first clamping ring allows the user to easily mark the desired insertion depth on the tubular element. In more particular embodiments, the replaceable instrumentation may be a probe and comprise a transducer configured to measure at least one physical property of a fluid, wherein the transducer is provided at the distal end, or dedicated distal end, of the replaceable instrumentation or probe.

Further disclosed is a fitting system comprising a connector fitting and a kit of parts of any kind set out above. The connector fitting has a free end, wherein the tubular element is configured to be joined with the connector fitting at the connector fitting free end. The second clamping ring is mounted to the connector fitting and the first clamping ring is in particular mounted to the tubular element. In certain embodiments, it may be provided that the second clamping ring is mounted to the connector fitting such that the latch extends beyond the free end of the connector fitting when the latch is positioned with the barbed hook of the latch positioned on a radially inward side of the latch.

It may further be provided that the tubular element, or a distal section thereof, respectively, is configured to be received within the connector fitting. It is noted that, within the framework of the present disclosure, the statement that the tubular element is received or inserted or advanced or the like, in or inside or through the connector fitting or other member, or is configured accordingly, shall not be construed in a way that this relates to the entire tubular element. In contrast, only a section of the tubular element may be received or inserted or advanced or the like, in or inside or through the connector fitting or other member.

A third clamping ring may be provided at the free end of the connector fitting, wherein the third clamping ring is configured to receive the tubular element through the third clamping ring and to frictionally lock the tubular element by clamping. In more particular embodiments, the third clamping ring may be provided with sealing elements, or at least one sealing element, configured for an at least supporting the sealing with the tubular element against leakage of fluid from the connector fitting along the exterior of the tubular element.

In that the sealing elements are provided by the third clamping ring the tubular element may be inserted into and removed from the connector fitting through the third clamping ring in a loosened position thereof, resulting in low friction when inserting or removing the tubular element and a reduced wear of the sealing elements while inserting or removing the tubular element. In particular, the sealing elements provided by the third clamping ring can ensure that the sealing is suitable for increased fluid pressures, i.e. for pressures which are above the threshold for which a fitting without the kit of parts according to the invention could be used. The sealing elements provided by the third clamping ring can, for this purpose, support the sealing provided by the connector fitting itself.

In case the connector fitting is fluidly connected to a containing structure configured to contain a fluid, wherein the containing structure may in particular comprise at least one of a vessel, a container and a fluid line, it may be provided that a shut-off device is fluidly interposed between the containing structure and the connector fitting. Said shut-off device may be used to close a fluid-containing structure when the tubular element is changed or removed, in particular when a fluid contained in the fluid-containing structure is at a pressure above atmospheric pressure. Preferably, said shut-off devices allows to isolate a volume of the fitting structure between said shut-off device and the third clamping ring from the fluid in the containing structure. Preferably, said volume is equipped with fluid in-and/or out-lets which allow to equalize the pressure between the surroundings and said volume.

As suggested above, the connector fitting may extend with the free end of the connector fitting upward or in an angle of greater than 15° to the horizontal.

In still further aspects of the present disclosure, disclosed is an assembly comprising any type of fitting system set forth above, wherein the second clamping ring is mounted to the connector fitting such that the latch extends beyond the free end of the connector fitting when the latch is positioned with the barb of the latch pointing radially inward. A distal end of the tubular element is received inside the connector fitting and at least one of the at least one groove adapted and configured to receive the barb is provided in the front face of the first clamping ring pointing away from the distal end of the tubular element. The barb of the barbed hook of the latch is received in a groove of the first clamping ring provided in the front face of the first clamping ring pointing away from the distal end of the tubular element.

A method for assembling the above-mentioned assembly comprising inserting a distal end of the tubular element into the connector fitting. At least one of the at least one groove adapted and configured to receive the barb is provided in the front face of the first clamping ring pointing away from the distal end of the tubular element. As the distal end of the tubular element is inserted into the connector fitting, the front face of the first clamping ring also points away from the connector fitting. The distal end of the tubular element is advanced inside the connector fitting, thereby advancing the first clamping ring towards the tip of the latch until the first clamping ring abuts against the sloping contact surface of the latch. While further advancing the tubular element, or the distal end thereof, respectively, inside or through the connector fitting, the first clamping ring advances along the sloping contact surface of the latch, thereby forcing the tip of the latch radially outward. The tubular element is further advanced inside the connector fitting until the front face of the first clamping ring pointing away from the distal end of the tubular element has passed the barb of the latch. The tip of the latch is returned radially inward to radially overlap the first clamping ring and achieve the desired positive lock. Provided that the latch is preloaded radially inward, the tip of the latch returns radially inward self-actuated. Subsequently, the tubular element with the first clamping ring attached thereto is preferably retracted in a direction out of the connector fitting until the barb of the latch is received inside a groove of the first clamping ring provided in the front face of the first clamping ring pointing away from the distal end of the tubular element. This retraction can happen without activity by the user caused by the pressure of the fluid inside the containing structure acting on the distal end of the tubular element. In other cases, it is the user who pulls the tubular element out. In still further cases, the tubular element remains in an un-retracted position, leaving latch and first clamping ring in an arrangement where the receiving will happen once the tubular element begins to move. In this embodiment, the engagement of barb and groove can be seen as an indication that likely because of an over-pressure event, i.e. an event with increased fluid pressure, the tubular element has moved since the last check.

In embodiments, the method may further comprise tightening a third clamping ring provided at an end of the connector fitting to clamp the tubular element. The third clamping ring may then frictionally lock the tubular element bidirectionally, while the positive lock effected by the latch and the first clamping ring is effective only in one direction, namely against retracting the tubular element from the connector fitting. As suggested above, the third clamping ring may comprise sealing elements configured for sealing with the tubular element when the third clamping member is tightened around the tubular element.

A method for disassembling the above-mentioned assembly comprises advancing the tubular element into the connector fitting until the barb of the latch is removed from the groove of the first clamping ring provided in the front face of the first clamping ring pointing away from the distal end of the tubular element. The tip of the latch is subsequently pulled radially outward until the radial inner end of the barbed hook of the latch is radially outward of the first clamping ring. The tubular element may then be retracted from and out of the connector fitting. In embodiments, the method may comprise loosening a third clamping ring which clamps and frictionally fixes the tubular element as a first step.

It is understood that the features and embodiments disclosed above may be combined with each other. It will further be appreciated that further embodiments are conceivable within the scope of the present disclosure and the claimed subject matter which are obvious and apparent to the skilled person by virtue of the present disclosure.

### Brief description of drawings

The subject matter of the present disclosure is now to be explained in more detail by means of selected exemplary embodiments shown in the accompanying drawings. The figures show
- Fig. 1: a first embodiment of a fitting system as herein described, wherein a probe is partly inserted into the connector fitting; and
- Fig. 2: An assembly using the fitting system according to the first embodiment, in which the probe is fully installed and locked in a measurement setup through a connector fitting.
- Fig. 3: A kit of parts for a second embodiment of a fitting system as herein described
- Fig. 4: An isometric view of an exemplary embodiment of a first clamping ring
- Fig. 5: An isometric view of an exemplary embodiment of a second clamping ring
- Fig. 6: An assembly using the fitting system according to the second embodiment, in which the probe is once fully installed and locked in a measurement setup through a connector fitting and once in the unlocked maintenance position

It is understood that the drawings may be highly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

### Description of embodiments

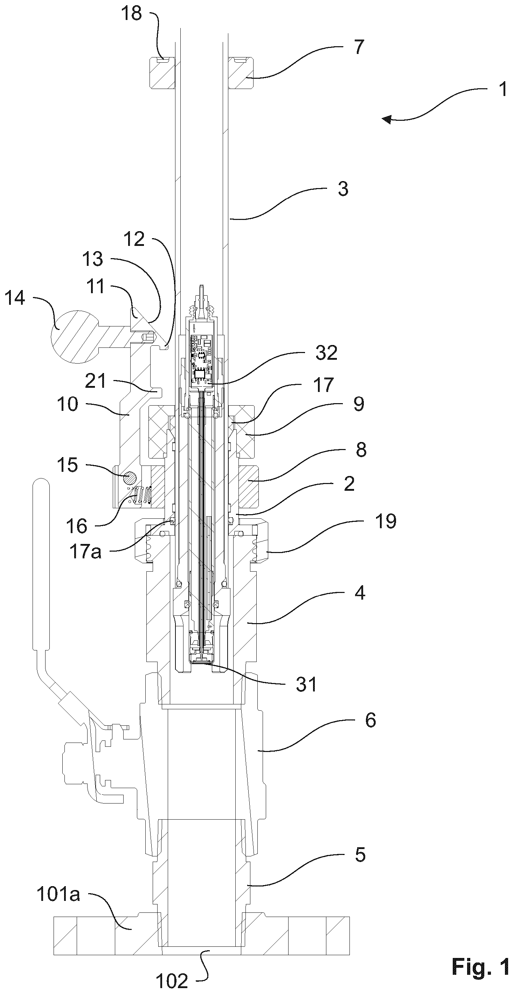

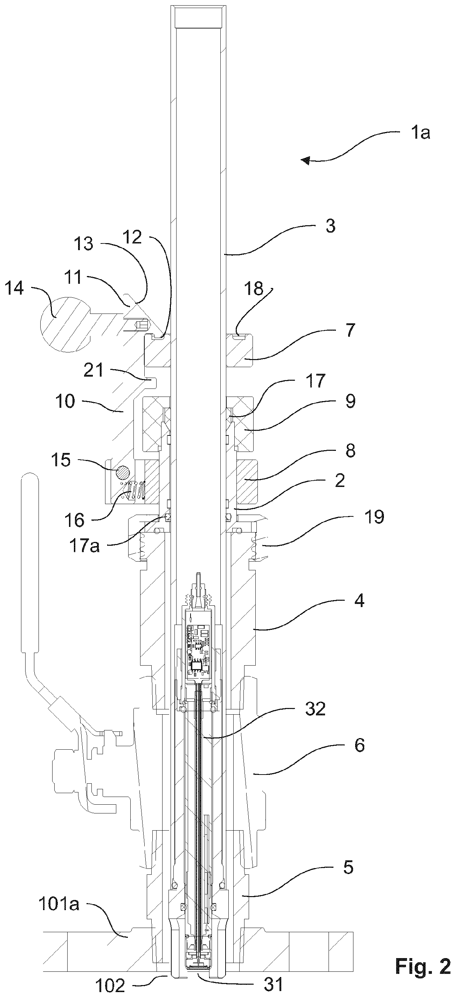

Figures 1 and 2 show a first embodiment of a fitting system 1 respectively an assembly 1a. A port 102 through flange 101 is provided to, for instance, insert a probe therethrough with a transducer 31 provided at a distal end thereof. Transducer 31 is configured to measure at least one physical property of a fluid in fluid volume 100. A fitting system 1 configured to insert and hold transducer 31 into and inside fluid volume 100 comprises probe, or, more generally speaking, replaceable instrumentation 32 mounted to tubular element 3, and connector fitting 2 configured to receive tubular element 3 therethrough. In figure 2, tubular element 3 is shown in a fully inserted state, wherein transducer 31 is placed inside fluid volume 100 and tubular element 3 is locked with respect to the connector fitting 2, which is turn is fixed to the fluid volume 100 via, for example, the flange 101a which can be mounted to a wall of a containing structure 101 comprising a corresponding port allowing the access to the fluid volume 100. Figure 1 shows tubular element 3 partly inserted into or removed from the measurement setup. The configuration shown in Figure 1 is also called "maintenance position", as this position allows to isolate the tubular element 3 and the replaceable instrumentation 32 together with the transducer 31 from the fluid volume 100 by closing the shut-off device 6 for maintenance procedures such as cleaning, replacement and/or repair.

In the illustrated embodiment, a first nozzle 5 connects to port 102. Connector fitting 2 is connected to a second nozzle 4 by retaining nut 19. A shut-off device 6 is fluidly interposed between nozzle 5 and nozzle 4, and, consequently, between fluid volume 100 and connector fitting 2. Shut-off device 6 enables to pressurize fluid volume 100 and maintain fluid volume 100 isolated from the environment when probe 3 is removed from connector fitting 2. In some embodiments, second nozzle 6 can be equipped with additional ports to allow adapting the pressure inside it to a desired level and /or to rinse the at least parts of the replaceable instrumentation 32 or the transducer 31 with cleaning liquids or to provide a calibration environment. Third Clamping ring 9 is provided at a free, and, in the present embodiment, upper, end of connector fitting 2. Port 102 is often provided on a top side of the containing structure configured to contain a fluid, or, in other words, adjacent or above a top surface of a fluid contained in fluid volume 100. In many cases, connector fitting 2 may extend upwards, in an angle of equal or greater to about 15° above the horizontal with a free end thereof located atop. A clamping ring 9, elsewhere in this document referred to as the third clamping ring, is provided at the free end of connector fitting 2. According to some fitting systems known in the art, third clamping ring 9 may be tightened to frictionally lock a tubular element 3 relative to a connector fitting 2. Moreover, third clamping ring 9 may provide sealing member 17 at its inner circumference. When third clamping ring 9 is tightened, sealing member 17 effects sealing between third clamping ring 9 and tubular element 3 to prevent leakage along the outer surface of tubular element 3. When third clamping ring 9 is loosened, tubular element 3 may move axially inside connector fitting 2. In the disclosed embodiment, there is, besides the sealing member 17 also a second sealing member 17a, which is an O-ring arranged in a distal region of the connector fitting 2. When the third clamping ring 9 is loosened, for example to move the tubular element 3 from a maintenance into a measurement position or vice versa, the second sealing member 17a can prevents significant leaks. Due to the kit of parts according to the invention, such a motion is only possible, if the operator is physically able to push move the tubular element 3 against the fluid pressure. This limits the pressure difference against which, in this embodiment, the second sealing member 17 is preferably able to provide a sealing effect.

The strength of the frictional lock of tubular element 3 to connector fitting 2, or relative to fluid volume 100, respectively, may be limited with respect to the allowable pressure of fluid volume 100. If said pressure exceeds a certain threshold, the frictional force exerted onto tubular element 2 by clamping ring 9 may become lower than the pressure force exerted by the fluid, and consequently tubular element 3 may be forced out of connector fitting 2. An increase of the clamping force and consequently the frictional force is limited in order not to damage sealing member 17 or the tubular element 3.

This issue is mitigated by providing a kit of parts as herein described, which is intended to form a fitting system 1 further herein described and allows to secure the probe 32 mounted to the tubular element 3 or any other tubular element connected to the connector fitting 2 by positive locking. With reference to figure 1, the kit of parts essentially comprises tubular element 3, into which, in the present exemplary embodiment, the replaceable instrumentation 32 in the form of a probe is mounted. In addition, the kit of parts comprises the first clamping ring 7 and the second clamping ring 8. First clamping ring 7 is configured and dimensioned to be clamped onto and attached to tubular element 3. Second clamping ring 8 comprises a latch 10 attached thereto, pivotable relative to second clamping ring 8 around pivot axis 15. A radially outer side of latch 10 extends further from the pivot axis 15 than a radially inner side. In the illustrated embodiment, a tip surface 13 at a tip of latch 10 is bevelled. Thus, tip surface 13 is a sloping contact surface provided at the tip of latch 10. To form the fitting system 1, second clamping ring 8 is mounted onto connector fitting 2 such that latch 10 extends beyond a free end of connector fitting 2 when latch 10 is positioned with barbed hook 11 of latch 10 on a radially inward side of latch 10. In order to connect tubular element 3 to connector fitting 2, for instance to insert a probe or a replaceable instrumentation 32 comprising transducer 31 into a measurement setup, the distal end of tubular element 3 is inserted into connector fitting 2, as illustrated in figure 1. Tubular element 3 is advanced inside connector fitting 2, thereby advancing first clamping ring 7 towards the tip of latch 10 until first clamping ring 7 abuts against sloping contact surface 13 of latch 10. While further advancing tubular element 3 inside connector fitting 2, first clamping ring 7 advances along sloping contact surface 13 of latch 10, thereby forcing the tip of latch 10 radially outward. Tubular element 3 is further advanced inside connector fitting 2 until the front face of first clamping ring 7 pointing away from the distal end of tubular element 3 has passed barb 12 of latch 10. The tip of latch 10 is returned radially inward to radially overlap first clamping ring 7 and thus achieve the desired positive lock. In some embodiments, the latch 10 is further equipped with a stop 21, which prevents that the tubular element 3 is advanced even further than a maximum depth defined by said stop and the position of the distal face of the first clamping ring 7. Provided that latch 10 is preloaded radially inward, as, in the exemplary embodiment, by spring 16, the tip of latch 10 returns radially inward self-actuated. Subsequently, tubular element 3 with first clamping ring 7 attached thereto can be retracted in a direction out of connector fitting 2 until barb 12 of latch 10 is received inside groove 18 of first clamping ring 7 provided in the front face of first clamping ring 7 pointing away from the distal end of tubular element 3.

As a result, assembly 1 as illustrated in figure 2 is provided. Barbed hook 11 of latch 10 provides a positive lock securing against removal of tubular element, or probe, 3 from connector fitting 2. Barb 12 of latch 10 is received inside groove 18 of first clamping ring 7. Thus, the tip of latch 10 is form-locked to first clamping ring 7 in a radial direction, and thus the positive lock securing against removal of tubular element 3 cannot be accidentally unlocked. A positive pressure inside fluid volume 100 supports securing, as it forces a rim shaped between groove 18 and a radial outer circumference of first clamping ring 7 into an undercut shaped between the axially extending body section of latch 10 and barb 12 of latch 10. Moreover, clamping ring 9 with sealing 17 may be locked to provide sealing and an additional frictional lock of tubular element 3 to connector fitting 2.

For removing probe 3, or, more generally speaking, tubular element 3 from connector fitting 2, tubular element 3 needs first to be advanced into connector fitting 2 until barb 12 of latch 10 is removed from 18 groove of first clamping ring 7 provided in the front face of first clamping ring 7 pointing away from the distal end of tubular element 3. That is, tubular element 3 needs to be advanced against any positive pressure inside fluid volume 100 before unlocking the positive lock between clamping ring 7 and latch 10. An operator must thus become aware of and be warned from any positive pressure inside fluid volume 100 when intending to remove tubular element 3, or it might even be impossible to advance tubular element 3 sufficiently against the positive pressure to unlock the positive lock between clamping ring 7 and latch 10. The tip of latch 10 is subsequently pulled radially outward until the radial inner end of barbed hook 11 of latch 10 is radially outward of first clamping ring 7. Manipulating knob 14 is provided at the tip of latch 10 to manually pull the tip of latch 10 radially outward against the restoring force of spring 16. Pivot axis 15 of latch 10 is provided at least essentially at an end of latch 10, such that in particular latch 10 has no actuating cantilever beyond pivot axis 15 when seen from the tip of the latch. Hence, accidental unlocking of latch 10 by a grasping movement is prevented. After the tip of latch 10 is pulled radially outward and the radial inner end of barbed hook 11 of latch 10 is radially outward of first clamping ring 7, tubular element 3 may be retracted from and out of connector fitting 2. In embodiments, the method may comprise loosening third clamping ring 9 as a first step.

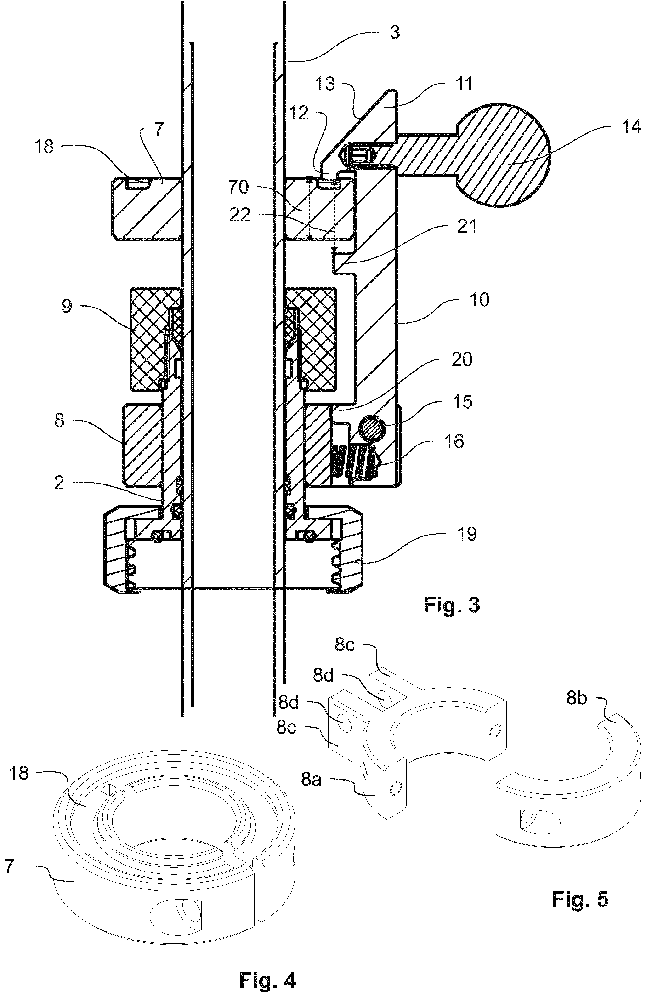

Figure 3 shows a kit of parts for a second embodiment of a fitting system. In contrast to the first embodiment, the latch 10 according to the second embodiment comprises limiting means 20 in the form of a radially inwardly protruding protrusion acting against a corresponding surface provided by the second clamping ring 8. The limiting means 20 limit the range of motion of the latch 10 caused by the pre-loading provided by the spring 16. Thereby, it is prevented that the Tubular element 3 contacts the latch during the insertion and it is ensured that only the first clamping ring 7 is used to push the barbed hook 11 radially outwards as described above. This reduced the wear on the tubular element 3 and helps to maintain its smooth outer surface needed to ensure the sealing. Figure 3 also illustrated the relationship between the first clamping ring 7 and the stop 21 and the barb 12 of the barbed hook 11: The axial distance 22 between the proximal face of the stop 21 and the most distal part of the barbed hook 11 being greater than the axial extent 70 of the first clamping ring 7. The distance 22 between stop 21 and hook 11 is preferably chosen such that -assuming normal working conditions- the latch 10 has sufficient time to move the barb 12 to the same radial distance as the groove 18 of the first clamping ring 7, before the first clamping ring 7 has passed the stop 7 on its insertion motion. On the other hand, a smaller distance 22 is helpful for the user as it allows him to precisely set the maximal the insertion depth via the position of the first clamping ring 7 and it also keeps the extent of the latch 10 small. Typically, these requirements are well fulfilled when distance 22 is less than twice the extent 70 or even less than 1.5 times the extent 70. In the illustrated embodiment, for example, the distance 22 is about 1.2 times the extent 70. The stop 21 prevents the user from knocking distal end of the tubular element or the replaceable instrumentation mounted to it against the opposite wall 101 of the containing structure during both, insertion and also the retraction of the tubular element, where - as explained above- the tubular element 3 needs to be inserted against to pressure of the fluid volume 100 to be able to unlock the latch 10.

Figure 4 shows an exemplary embodiment of a first clamping ring 7. As the first clamping ring 7 is intended to be mounted to the tubular element 3 which in turn is designed to be inserted into the connector fitting 2, there are in general no obstacles on the tubular element 3 which would hinder to mount the first clamping ring 7 by sliding it on. In order to allow the creation of a frictional lock by clamping, the shown first clamping ring 7 comprises two halves which are on one end connected with a flexure bearing. On the side opposite of the flexure bearing, they are equipped with a common bore. A tensioning device, for example a threaded bold and a nut or a clamp can be provided in said bore and be tensioned to force the two halves together creating the desired clamping force and thereby the frictional lock. The inside of the first clamping ring 7 can be coated or provided with an inlay to increase the friction between first clamping ring 7 and tubular element 3.

Figure 5 shows an exemplary embodiment of a second clamping ring 8. As the second clamping ring 8 is intended to be mounted to the connector fitting 2 which in general is provided with sealing structures or primary means to couple a tubular element to it - for example the third clamping ring 9 -, sliding the second clamping ring 8 on is often not possible or not practical. Therefore, the second clamping ring 8 can be provided in two halves 8a and 8b. In the illustrated embodiment, one of the halves 8a comprises the mounting structure for the latch 10. The mounting structure comprises two axially extending, parallel walls 8c which are provided with a common bore 8d. Preferable, the mounting structure for the latch comprises further a guide for the spring 16 or a similar mounting structure for other means to create the preferred pre-loading. The guide for the spring 16 can be a suitable sized blind hole arranged in centred between the two parallel walls 8c and in axial direction below the common bore 8d. The common bore 8d is designed to receive the pivot axis (15) of the latch. The two halves 8a and 8b are, at their respective contact surfaces, equipped with bores in which similar tensioning devices as the ones described for the first clamping ring 7 can be inserted and used to pull the two halves together, creating thereby the desired clamping force and thereby the resulting frictional lock. The inside of the second clamping ring 8 can be coated or provided with an inlay to increase the friction between first clamping ring 8 and connector fitting 2. It is also possible that connector fitting 2 is formed with a recess to receive the second clamping ring 8 therein or with a step or a structure to ensure a secure positional relationship between the second clamping ring 8 and the connector fitting 2.

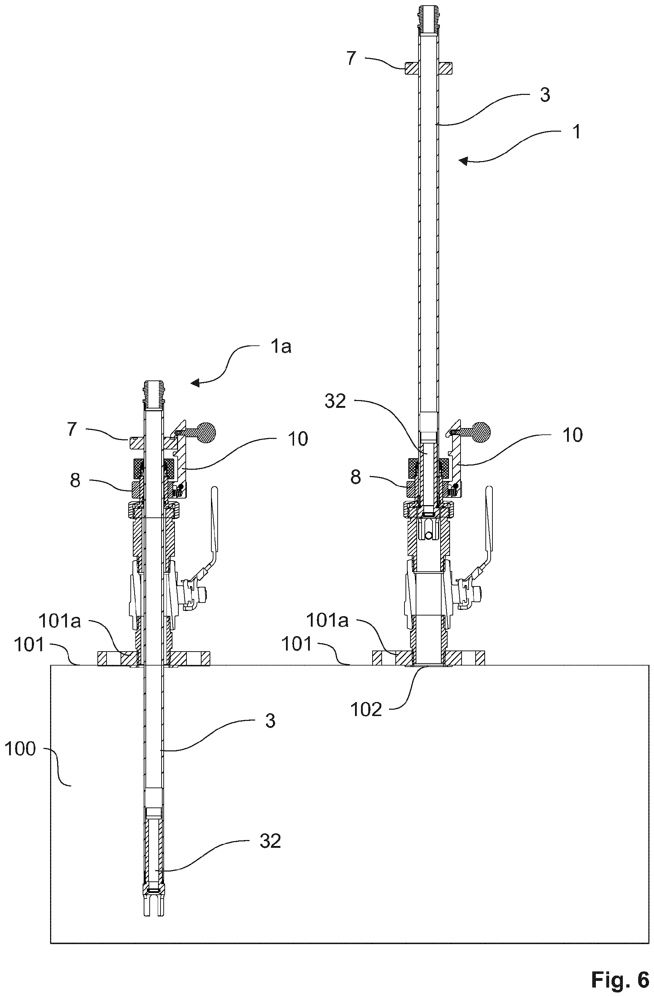

Figure 6 illustrates the fitting system 1 and the assembly 1a mounted to the same containing structure 101, surrounded by a wall 101. The wall 101 comprises two ports 102 equipped with flanges 101. To both flanges a connector fitting 2 is mounted via a set of nozzles and a shut-off device as discussed above. The second clamping ring 8 is mounted to the connector fitting 2 and a latch 10 according to the second embodiment is mounted to the second clamping ring 8. A replaceable instrumentation 32 is mounted in the distal part of the tubular element 3 and only close to the proximal end of the tubular element 3, there is the first clamping ring 7. Figure 6 shows on the left the fitting system in the measurement position where it is an assembly 1a with the barbed hook 11 being locked in the groove of the first clamping ring 7. On the right side of Figure 6, a similar fitting system is in the maintenance position, where the tubular element is pulled out of the fluid volume 100 to an extend that the distal end of the tubular element 3 and the replaceable instrumentation 32 can be separated from the fluid volume 100 by the shut-off device. In order to bring the fitting system 1 in this position, starting from the measurement position, the tubular element 3 needs to be pushed a little bit further, and against the fluid pressure into the fluid volume 100. This motion is limited by the stop 21 provided at the latch 10, so that the user cannot cause a collision with the wall 101. Once the tubular element 3 is slightly further inserted than in the measurement position, the latch can be released by pulling it radially away from the tubular element while said tubular element is pulled out. Once the proximal surface of the first clamping ring 7 is proximal from the distal end of the barbed hook, the user can release the latch 10: It might contact the first clamping ring 7, but the limiting means 20 -if present- will prevent that it collides with the tubular element 3. Therefore, the handling is particular comfortable, intuitive and safe.

While the subject matter of the disclosure has been explained by means of exemplary embodiments, it is understood that these are in no way intended to limit the scope of the claimed invention. It will be appreciated that the claims cover embodiments not explicitly shown or disclosed herein, and embodiments deviating from those disclosed in the exemplary modes of carrying out the teaching of the present disclosure will still be covered by the claims.

### Reference signs list

- 1: fitting system
- 1a: Assembly
- 2: Connector fitting
- 3: Tubular element,
- 31: transducer
- 32: replaceable instrumentation, probe
- 4: Nozzle
- 5: Nozzle
- 6: Shut-off device
- 7: (First) clamping ring
- 70: axial extent of the first clamping ring
- 8: (Second) clamping ring
- 8a,b: First and second halves of the second clamping ring
- 8c: parallel side walls of the second clamping ring
- 8d: Bore
- 9: (Third) clamping ring
- 10: Latch
- 11: Barbed hook
- 12: Barb
- 13: Tip surface, sloping contact surface
- 14: Manipulating knob
- 15: Pivot axis
- 16: Spring
- 17: Sealing member
- 17a: Second sealing member
- 18: Groove
- 19: Retaining nut
- 20: limiting means, protrusion on the latch
- 21: Stop
- 22: axial distance between the proximal face of the stop and the most distal part of the barbed hook
- 100: Fluid volume
- 101: Wall, containing structure
- 101a: Flange
- 102: Port

## Claims

1. A kit of parts configured for releasably coupling and securing a tubular element (3) to a connector fitting (2), the kit of parts comprising the tubular element (3), a first clamping ring (7) configured to attach to the tubular element, a second clamping ring (8), and a latch (10), the latch pivotably attached to the second clamping ring (8) at a pivot axis (15), the latch extending from the pivot axis to a tip of the latch along an axial direction of the latch, wherein the tip of the latch is moveable along a radial direction of the second clamping ring, wherein the tip of the latch comprises a barbed hook (11) and is arranged with the barbed hook extending radially inward in relation to the second clamping ring and with the barb (12) extending axially towards the second clamping ring such that an undercut is shaped between an axially extending body section of the latch and the barb,
wherein the first clamping ring (7), in an axial face thereof, comprises at least one groove (18) adapted and configured to receive the barb (12), wherein a rim shaped between the at least one groove and a radial outer circumference of the first clamping ring is sized and configured to be received within the undercut.

2. The kit of parts according to the preceding claim, wherein the tip of the latch (10) is preloaded radially inward.

3. The kit of parts according to the preceding claim, wherein a spring (16) is provided to effect the preload.

4. The kit of parts according to any preceding claim, wherein the pivot axis (15) of the latch is provided at least essentially at an end of the latch, such that in particular the latch has no actuating cantilever beyond the pivot axis when seen from the tip of the latch.

5. The kit of parts according to any preceding claim, wherein a tip surface (13) at the tip of the latch is bevelled, wherein a radially outer side of the latch extends further than a radially inner side, so as to provide a sloping contact surface.

6. The kit of parts according to any preceding claim, wherein the latch (10) comprises a protruding stop (21), extending radially inwardly, whereby said stop (21) is arranged between the pivot axis (15) and the barbed hook (11), the axial distance (22) between the proximal face of the stop (21) and the most distal part of the barbed hook (11) being greater than the axial extent (70) of the first clamping ring (7), preferably, it is less than 2 times, most preferably, less than 1.5 times the axial extent (70) of the first clamping ring (7).

7. The kit of parts according to any preceding claim, whereby at least one of the clamping rings (7, 8), preferably at least the second clamping ring (8), most preferably the first and the second clamping ring (7, 8) comprises two separatable halves (8a, 8b), allowing the kit to be mounted to an existing connector fitting and/or to an existing tubular element.

8. The kit of parts according to any preceding claim, wherein the tubular element (3) comprises a mounting structure to mount a replaceable instrumentation having a dedicated distal end to the distal end of the tubular element (3), wherein the first clamping ring (7) is mounted to the tubular element (3) such that at least one of the at least one groove (18) of the first clamping ring (7) is arranged on a proximal-facing front face of the first clamping ring (7), and wherein the first clamping ring (7) is mounted at a non-zero distance from the dedicated distal end.

9. The kit of parts according to the preceding claim, wherein the replaceable instrumentation is a probe and comprises a transducer (31) configured to measure at least one physical property of a fluid provided at the distal end of the replaceable instrumentation.

10. A fitting system comprising a connector fitting (2) and a kit of parts according to any preceding claim, the connector fitting having a free end, wherein the tubular element is configured to be joined with the connector fitting (2) at the connector fitting free end, wherein the second clamping ring (8) is mounted to the connector fitting.

11. The fitting system according to the preceding claim, wherein the tubular element (3) is configured to be received within the connector fitting (2) and wherein a third clamping ring (9) is provided at the free end of the connector fitting, wherein the third clamping ring is configured to receive the tubular element (3) through the third clamping ring (9) and to frictionally lock the tubular element by clamping.

12. The fitting system according to any of claims 10 through 11, wherein the connector fitting (2) is fluidly connected to a containing structure (101) configured to contain a fluid, wherein the containing structure in particular comprises at least one of a vessel, a container and a fluid line, and/or wherein in particular a shut-off device (6) is fluidly interposed between the containing structure and the connector fitting.

13. An assembly (1) comprising a fitting system according to any of claims 10 to 12, wherein a distal end of the tubular element (3) is received inside the connector fitting (2) and at least one of the at least one groove (18) adapted and configured to receive the barb (12) is provided in the front face of the first clamping ring pointing away from the distal end of the tubular element, and wherein the barb (12) of the barbed hook (11) of the latch (10) is received in a groove (18) of the first clamping ring (7) provided in the front face of the first clamping ring pointing away from the distal end of the tubular element.

14. A method for assembling the assembly (1) according to claim 13 from a fitting system according to any of claims 10 through 12, wherein the latch comprises the features of claims 2 and 5, the method comprising
• inserting a distal end of the tubular element (3) into the connector fitting (2), whereby at least one of the at least one groove (18) adapted and configured to receive the barb (12) is provided in the front face of the first clamping ring (7) pointing away from the distal end of the tubular element (3),
• advancing the tubular element inside the connector fitting (2), thereby advancing the first clamping ring (7) towards the tip of the latch (10),
• abutting the first clamping ring (7) against the sloping contact surface (13) of the latch,
• further advancing the tubular element (3) inside the connector fitting (2) with the first clamping ring (7) advancing along the sloping contact surface (13) of the latch (10), thereby forcing the tip of the latch radially outward,
• further advancing the tubular element (3) inside the connector fitting (2) until the front face of the first clamping ring pointing away from the distal end of the tubular element has passed the barb of the latch, whereby the distal end of the latch returns radially inward and radially overlaps the first clamping ring, and
• Preferably, retracting the tubular element (2) with the first clamping ring (7) attached thereto in a direction out of the connector fitting (2) until the barb (12) of the latch (10) is received inside a groove (18) of the first clamping ring provided in the front face of the first clamping ring pointing away from the distal end of the tubular element.

15. A method for disassembling the assembly (1) according to claim 13, comprising
• advancing the tubular element (3) into the connector fitting (2) until the barb (12) of the latch (10) is removed from the groove (18) of the first clamping ring (7) provided in the front face of the first clamping ring pointing away from the distal end of the tubular element (3),
• pulling the tip of the latch (10) radially outward until the radial inner end of the barbed hook (11) of the latch (10) is radially outward of the first clamping ring (7), and
• retracting the tubular element (3) at least partially from the connector fitting (2).
